(19) Europäisches Patentamt / European Patent Office / Office européen des brevets

(11) **EP 4 529 078 B1**

(12) **EUROPEAN PATENT SPECIFICATION**

(45) Date of publication and mention of the grant of the patent:
**16.09.2026 Bulletin 2026/38**

(21) Application number: **23199255.3**

(22) Date of filing: **23.09.2023**

(51) International Patent Classification (IPC):
***H04L 9/08*** *(2006.01)*

(52) Cooperative Patent Classification (CPC):
**H04L 9/0852**

(54) **QUANTUM RANDOM NUMBER GENERATION SYSTEM FOR SELF-TESTING GENERATION OF TRULY RANDOM BIT STRINGS AND METHOD FOR GENERATION OF STRING OF QUANTUM RANDOM NUMBERS**

QUANTENZUFALLSZAHLENERZEUGUNGSSYSTEM ZUR SELBSTTESTERZEUGUNG VON WIRKLICH ZUFÄLLIGEN BITKETTEN UND VERFAHREN ZUR ERZEUGUNG EINER QUANTENZUFALLSZAHLENKETTE

SYSTÈME DE GÉNÉRATION DE NOMBRES ALÉATOIRES QUANTIQUES POUR LA GÉNÉRATION D'AUTO-TEST DE CHAÎNES DE BITS RÉELLEMENT ALÉATOIRES ET PROCÉDÉ DE GÉNÉRATION DE CHAÎNE DE NOMBRES ALÉATOIRES QUANTIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**26.03.2025 Bulletin 2025/13**

(73) Proprietor: **Uniwersytet Gdanski**
**80-309 Gdansk (PL)**

(72) Inventors:
- **Schlichtholz, Konrad**
  **Gdansk (PL)**
- **Woloncewicz, Blanka**
  **Gdansk (PL)**
- **Das, Tomoghna**
  **Gdansk (PL)**
- **Markiewicz, Marcin**
  **Krakow (PL)**
- **Zukowski, Marek**
  **Gdynia (PL)**

(74) Representative: **Czarnik, Maciej et al**
**Triloka Czarnik Ozóg Kancelaria Patentowa i Adwokacka sp.p.**
**ul. Kornela Ujejskiego 12/7**
**30-102 Kraków (PL)**

(56) References cited:
**WO-A1-2020/257124**

- **HERRERO-COLLANTES MIGUEL ET AL: "Quantum random number generators", vol. 89, no. 1, 21 October 2016 (2016-10-21), XP055822716, ISSN: 0034-6861, Retrieved from the Internet <URL:https://arxiv.org/pdf/1604.03304.pdf> [retrieved on 20240206], DOI: 10.1103/RevModPhys.89.015004**
- **KAUSHIK JOARDER ET AL: "Loophole free interferometric test of macrorealism using heralded single photons", ARXIV.ORG, CORNELL UNIVERSITY LIBRARY, 201 OLIN LIBRARY CORNELL UNIVERSITY ITHACA, NY 14853, 25 December 2021 (2021-12-25), XP091109489, DOI: 10.1103/PRXQUANTUM.3.010307**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

The invention refers to self-testing quantum devices allowing generation of truly random bit strings and method for generation of string of quantum random numbers using the system.

This system - device and the protocol of creation of random numbers can be used in e.g for application in communication, cryptography, computer Monte Carlo simulations, password generation, banking encryption, lotteries and casinos, video-computer games, randomized controlled trials testing hypotheses, or samples of products. Pseudo random numbers used for task listed above pose the danger of hacking the procedures.

Random number generation is a crucial aspect of various fields of study, including cryptography, statistical analysis, and simulations. Random numbers are used to generate cryptographic keys, to simulate stochastic events, and to ensure the fairness of games and lotteries, among other applications. However, generating truly random numbers is a challenging task. Most computer-based random number generators rely on algorithms that are deterministic and thus in practice predictable, and thus produce only pseudo-random numbers.

A frequent approach to generating random numbers is through the use of pseudo-random number generators (PRNGs). PRNGs generate sequences of numbers that appear random but are generated using deterministic algorithms. These algorithms use a seed value to generate a sequence of numbers that has a statistical randomness property, making it difficult to predict future numbers in the sequence. However, if an attacker knows the seed value, they can reproduce the sequence of numbers, which compromises the security of applications that rely on those sequence of random numbers, [Barker E., Kelsey J., Recommendation for Random Number Generation Using Deterministic Random Bit Generators, NIST SP800-90A, January 2012].

Recently, quantum random number generators (QRNGs) have emerged as a promising solution to the limitations of PRNGs. QRNGs use the inherent fundamental randomness of quantum mechanical systems to generate truly random numbers. In QRNGs, quantum measurements of physical quantities like photon polarization are used to generate random numbers that cannot be predicted or reproduced by an attacker. These devices offer high levels of security, making them ideal for applications for which security is critical. However, many marketed devices rely on attenuated essentially classical light (coherent states), and thus their quantumness is questionable.

A promising development in the field of random number generation is the concept of device-independent quantum random number generators (DIQRNGs). These devices would not require any assumptions about the underlying physics or trust in the device manufacturer.

Instead, they rely on the non-classical correlations of the measurement outcomes of the device and the basic assumptions of the non-signaling theorem. The main resource used for DIQRNGs is quantum entanglement which enables Bell-inequality violation which certifies the non-classical (non-deterministic) origin of the results.

A features of QRNGs is the possibility of self-testing of the device. A self-testing device can monitor the output statistics conditioned on the input to perform verification of the quality of the obtained randomness, and further based on this knowledge improve on this quality. This is most commonly quantified using the concept of min-entropy which is related to the probability of guessing the outcome by third parties. This feature is important for the device as the environment fluctuations and imperfections of the device can result in temporal or permanent bias in the obtained bits and self-testing allows for effective compensation of such effects.

Multiple quantum random number generators based on optical devices were proposed. Usually the involve highly attenuated beams of light of average intensity much below one photon per detection time gate. The main phenomenon used is random distribution of detection events between exit beams of a beam splitter oran interferometer. Most commonly weak coherent states obtained by attenuation of a pulsed laser beam are used as input light states to such devices, because this is an easy operational procedure, see examples:

- T. Ferreira da Silva, G. B. Xavier, G. C. Amaral, G. P. Temporão, and J. P. von der Weid, "Quantum random number generation enhanced by weak-coherent states interference," Opt. Express 24, 19574-19580 (2016).
- Christopher C. Gerry, Richard J. Birrittella, Paul M. Alsing, Amr Hossameldin, Miller Eaton, and Olivier Pfister, "Proposal for a quantum random number generator using coherent light and a non-classical observable," J. Opt. Soc. Am. B 39, 1068-1074 (2022).
- Davide Rusca, Thomas van Himbeeck , Anthony Martin, Jonatan Bohr Brask , Weixu Shi, Stefano Pironio , Nicolas Brunner, Hugo Zbinden . "Practical self-testing quantum random number generator based on an energy bound". arXiv: 1904.04819, (2019).
- WO/2018/065593.

Such devices however cannot be indisputably classified as quantum random number generators as coherent states are the most classical states of light for which a direct violation of classicality is impossible. They do not have even the anti-bunching property which is the most elementary feature of a non-classical light.

There are solutions which are based on single photon states sources:

- CN206209694U,
- EP3674885B1,
- WO2006133650A1.

These however also do not make direct tests of quantumness of the state, and thus of randomness of the bits. Quantum randomness is rather assumed based on the construction of the device.

There is also a proposal of QRNG device based on a single photon which claims to verify the non-classicality of the state:

- Shafi, K. M., Chawla, P., Hegde, A. S., Gayatri, R. S., Padhye, A., & Chandrashekar, C. M., Multi-bit quantum random number generator from path-entangled single photons. arXiv:2202.10933, (2022).

However the claim that quantum nature random numbers produced by the setup is based on a violation of a Bell inequality can be easily shown to be wrong.

There are schemes which verify the non-classical origin of the randomness through Bell inequality:

- Pironio, S., Acín, A., Massar, S. et al. Random numbers certified by Bell's theorem. Nature 464, 1021-1024 (2010).
- Liu, Y., Zhao, Q., Li, MH. et al. Device-independent quantum random-number generation. Nature 562, 548-551 (2018).

However, these schemes use states of two entangled particles in distinction with ours in which we use the entanglement of single-photon excitations in two output modes of a beamsplitter. They are based on standard Bell experiments. Our scheme is based on non-classicality of a single photon (often named as "nonlocality" of a single photon), in a specific configuration of weak homodyne measurement, the correct link of which with Bell's theorem has been established only recently. Thus, these concept demonstrations and our invention are based on entirely different core ideas, and thus form alternative technological paths. E.g. our device operates in an event ready mode (heralding) by default, the two above need re-arrangement to entanglement - swapping configuration to operate in event-ready mode. This would require detection in heralding station of pairs of photons in coincidence, and therefore would lead to a much sharper reduction of generated random bits in the case of non-perfectly efficient detection.

Another type of QRNG uses homodyne detection to obtain continuous variable based random numbers:

- P. R. Smith, D. G. Marangon, M. Lucamarini, Z. L. Yuan, and A. J. Shields, Simple source device-independent continuous-variable quantum random number generator, Phys. Rev. A 99, 062326 (2019).
- Weinan Huang, Yichen Zhang, Ziyong Zheng, Yang Li, Bingjie Xu, and Song Yu, Practical security analysis of a continuous-variable quantum random-number generator with a noisy local oscillator, Phys. Rev. A 102, 012422 (2020).

These, however, do not use weak homodyne measurement schemes which are based on measurements of discrete degrees of freedom like photon numbers. Moreover, they do not use Bell inequality violation for non-classicality verification. However, this is the Bell inequality violation which definitely certifies non-classicality of a process. And therefore, the protocols do not guarantee the true quantum randomness.

There are QRNG devices which perform additional self-testing to enhance the randomness of obtained bits:

- US 2015/227343
- EP 1447740
- WO2021215941

Those, however, do not use to this end a Bell inequality violation, and non-classicality of a single photon.

In several works various schemes for testing non-classicality of single photon in superposition of two exit modes of a beamsplitter have been discussed:

1. S. M. Tan, D. F. Walls, and M. J. Collett, Nonlocality of a single photon, Phys. Rev. Lett., 66:252-255, (1991).
2. L. Hardy, Nonlocality of a single photon revisited, Phys. Rev. Lett., 73:2279-2283, (1994).
3. G. Donati, T. Bartley, X-M. Jin, M-D. Vidrighin, A. Datta, Barbieri M., and I. A. Walmsley, Observing optical coherence across Fock layers with weak-field homodyne detectors, Nat. Commun., 5:5584, (2014).
4. T. Das, M. Karczewski, A. Mandarino, M. Markiewicz, B. Woloncewicz, and M. Zukowski, Can single photon excitation of two spatially separated modes lead to a violation of Bell inequality via weak-field homodyne measurements? New Journal of Physics, 23(7):073042, (2021).

5. T. Das, M. Karczewski, A. Mandarino, M. Markiewicz, B. Woloncewicz, and M. Zukowski, Wave-particle complementarity: detecting violation of local realism with photon-number resolving weak-field homodyne measurements, New Journal of Physics, 24(3):033017, (2022).
6. T. Das, M. Karczewski, A. Mandarino, M. Markiewicz, B. Woloncewicz, and M. Zukowski, Comment on 'Single particle nonlocality with completely independent reference states'. New Journal of Physics, 24(3):038001, (2022).
7. T. Das, M. Karczewski, A. Mandarino, M. Markiewicz, B. Woloncewicz, and M. Zukowski, Remarks about Bell-nonclassicality of a single photon, Physics Letters A, 435:128031, (2022).
8. T. Das, M. Karczewski, A. Mandarino, M. Markiewicz, and M. Zukowski, Optimal Interferometry for Bell Non-classicality Induced by a Vacuum-One-Photon Qubit, Phys. Rev. Applied 18, 034074, (2022).

All publications listed above are theoretical scientific works describing the interferometric effects which are useful in devising of our RNG. The works 1-8 do not study or suggest any practical applications of these interferometric effects. Documents WO2020/257124A1 and Miguel Herrero-Collantes et al, Quantum random number generators, DOI: 10.1103/RevModPhys.89.015004, 2016, constitute also relevant prior art.

The present invention is defined by the appended independent claims. Preferred embodiments are set out in the dependent claims.

According to the invention, the random bits are obtained via detection events in detectors observing two exit beams of a balanced two input -two output port beamsplitter which is fed with a heralded single photon via one defined input port. The most important characteristics of the invention is the interferometric configuration which allows to test the quantumness of the optical state (i.e. that the source indeed produces heralded single photons). Additionally, the interferometric configuration is switched off during the random bit generation runs. Thus possible imperfections related with tuning of the interferometer do not affect the generation. The system also known as a device can be realized using a suitable combination of commercial grade quantum optical and electronic equipment.

The system-invention-device uses hybrid weak homodyne photon counting detection scheme to verify the non-classicality of a single photon and therefore of the true fundamental randomness of the results. What is more, based on the obtained violation of a Bell inequality, the device performs a self-test to verify the quality of the randomness to allow for extracting fully random bit strings from the obtained results. The performed Bell test does not have to be a loophole-free Bell one, as the existence of Bell non-classicality of quantum systems was established in many previous experiments, and violation of Bell inequality in QRNGs takes the role of verification of the correct operation of the quantum device. The invention-device also produces two independent sequences of quantum-pseudo-random numbers between quantum random number generation runs (generation runs are only those in the case of which the heralding detector fires) which are used by the device in Bell test to determine the local settings. Such a combination of features is not present in any current state-of-the-art device.

The subject matter of the invention is described in the claims.

The invention is described in details in examples and drawings:

Fig. 1 The general scheme of the device;
Fig. 2 Scheme of a particular hardware realization of the device showing a sub-division of control unit and the interferometric configuration
Fig. 3a Scheme of the particular hardware realization of the device with outlined interference stations A and B with corresponding detectors from system of detectors
Fig. 3b Schematic representation of a specific configuration of the control unit

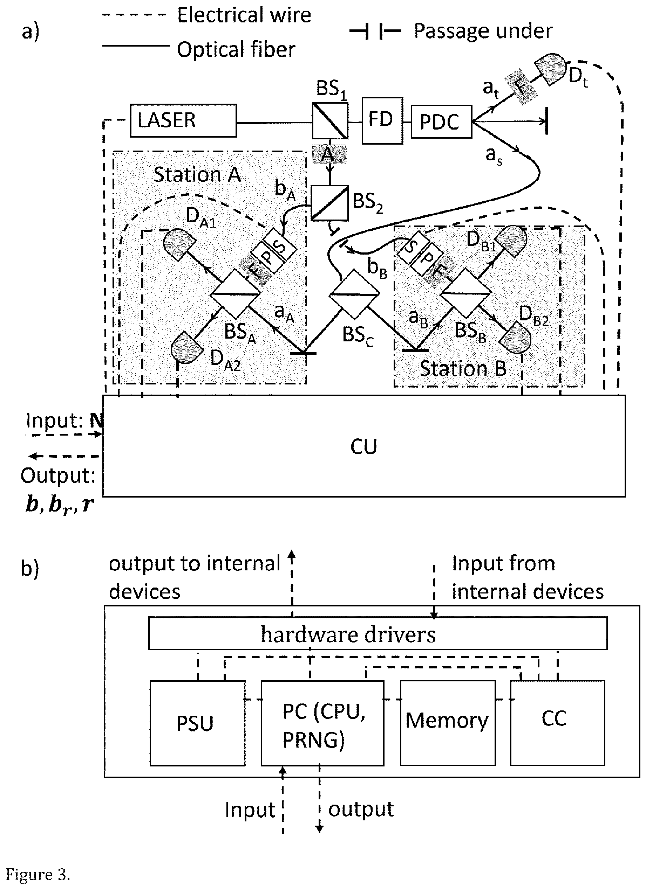

Figure 3. a) Scheme of the example realization of the invention. b) The example of the control unit.

**General example 1:**

**Introduction**

The invention-device is based on a specific interferometric configuration monitored and operationally manipulated by a control unit. The control unit collects information on the response of the detectors monitoring the exit beams of the interferometer, and out of that forms a random-bit string and in randomly chosen moments it is responsible for performing a self-testing of the quality of quantum quantumness of the input state of the device, and therefore of the quality of obtained randomness. This is performed by conducting a specific Bell inequality test and in the next step calculating a lower bound on min-entropy which quantifies the fraction of fully random bits in the generated bit string.

**General description of the elements of the invention-device:**

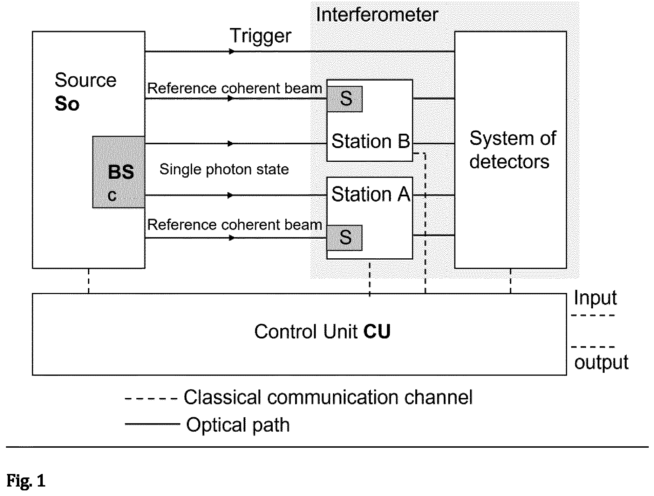

The invention is a system based on the elements described below with its configuration and connections

presented in Figure 1.

Special interferometer comprising parts described below connected by optical paths, and fed with a single photon input in a way also described below

- A compound pulsed source **So** of heralded single photon and two reference weak coherent states. A single photon, generated by pulsed (e.g .parametric down conversion - PDC) source **So** in signal mode, is beam-split on the two-input two-output port beamsplitter $\mathbf{BS_C}$**.** The coherent states play the role of reference states in the sense that the serve as local oscillators in the separated detection stations **A** and **B,** which allow to perform two weak homodyne measurements on two beams exited by the heralded single photon (in particle representation this represents a superposition of the photon to be in either this or that beam). Source **So** sends the information about successful generation of single photon to the detector station described further in the text. This in the case of PDC effect used to get heralded single photons, is obtained by a detection event in the idler mode of the down converter.

A detection of a single photon in the idler mode acts as trigger which heralds the presence of a single photon in the signal mode. If one uses a deterministic source of signal photons, their presence is heralded by the activation act of the source. Information about successful generation of single photon in the signal mode is encoded as a classical information (electronic signal) and passed to the control unit.

- Two interference stations A and B which via a suitable unbalanced beasplitter mix the beams of reference coherent states ("local oscillators") with the beams derived form $\mathbf{BS_C}$**.** carrying a superposition od single photon excitations. Importantly the local oscillator can be blocked before entering the unbalanced beamsplitters. with shutters **S,** two interference stations A and B which mix the beams of reference coherent states with the beams derived form $\mathbf{BS_C}$**.** carrying a superposition od single photon excitations , wherein hat is more, stations can modify interference properties of the input states, in particular they can block input ports into which reference coherent state is input,
- System of photo detectors monitoring all exit optical modes of the device. Each of these must be capable to detect single photons.

Control unit **CU** formed of a coincidence unit and a computer or a chip-system analyzing the data and controlling the shutters in the interferometer. Control unit is characterized by the following:

- The control unit **CU** is connected by classical communication channel to source **So** and can control initiation of its pulsed operation..
- The control unit **CU** is connected by classical communication channels to interference stations A and B and can control their protocol settings in the Bell tests and RNG runs, that is the shutters (open/closed), as well can correct the possible detuning of relative phases (non-protocol action tuning the device to optimal interference).
- User can input to the **CU** number of required fully random bits **N.**
- The control unit **CU** comprises a coincidence circuit which gathers information from system of detectors through classical communication channel and analyzes and saves results into a memory.
- The control unit **CU** could comprise pseudo-random number generator which can be used in the setting choice at interference stations A and B, the setting choice is saved into the memory.
- Alternatively, the control unit **CU** could produce quantum-pseudo-random numbers based on the failed quantum random number generation runs, that is the ones in which heralded single photon was not successfully generated, for the use in the setting choice of interference stations A and B. Such numbers are produced with shutter open, and in this configuration stations A and B constitute two pseudo quantum random number generators, each based on detections in exit ports of a beamsplitter to which enters via a specific port a weak coherent state.
- The control unit **CU** produces out of RNG runs a raw random bit string **b** form collected data from interferometer during the RNG runs (defined by effectively heralded single photon and shutters closed).
- The control unit **CU** can perform Bell-test upon obtained data using CH (Clauser-Horne) inequality. The principal aim of such a test is to estimate the quantum ness of the state of the optical files in the signal mode of the source. The obtained result of the test can also be used by the CU to modify the alignment and phase matching of the device in order to calibrate the device to optimize its operation.
- The control unit **CU** with the above data computes the min entropy of the collected bits which determines the bitrate **r.**
- The control unit **CU** can output the raw random bit string **b** and calculated bitrate **r** to the user for randomness extraction procedure, or it can perform randomness extraction procedure by itself and output quantum fully random bit string $\mathbf{b_r}$**.**

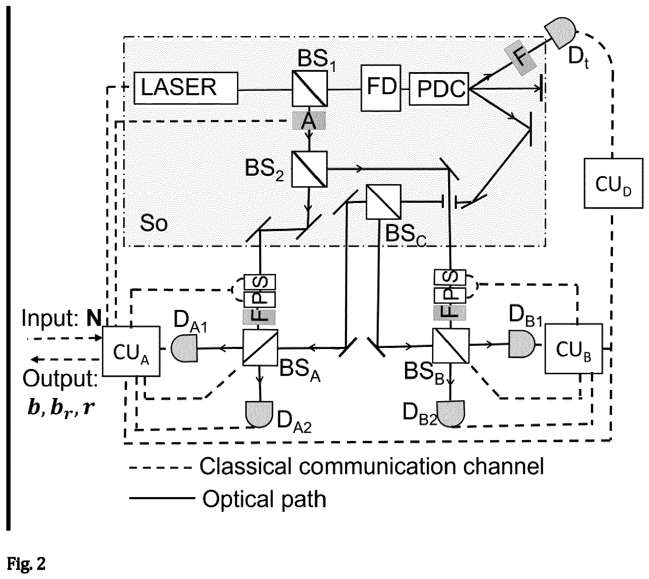

In particular the elements of the device can be realized using the following parts with their configuration and connections presented in Figure 2.

**LASER:** One Laser, which produces a pulsed coherent beam of light. The beam is transmitted into the beamsplitter $\mathbf{BS_1}$. Work of **LASER** can be controlled by control unit **CU CU.**

**F:** Filter, which transmits light with a strictly defined frequency profile (at least 3 in the system).

$\mathbf{BS_{1/2/A/B/C}}$**:** Beamsplitters, namely an optical two-input-two-output port device of various transmittivity /reflectivity relation. Out of that $\mathbf{BS_C}$ and $\mathbf{BS_2}$ are preferably 50-50, and $\mathbf{BS_A}$ and $\mathbf{BS_B}$ are tunable, or if the system is very stable of reflectivity/transmittivity relation which is optimal for the test runs. $\mathbf{BS_C}$**:** creates and feeds into beamsplitters $\mathbf{BS_A}$ and $\mathbf{BS_B}$ the quantum superposition of the single heralded photon of being either in the beam heading to station A or in the beam heading to station B.

**A:** Attenuator, potentially with controllable transmissivity (in some circumstances not necessary if $\mathbf{BS_1}$ can be put to have transmissivity close enough to 1 otherwise at least one in the device).

**FD:** One frequency doubling unit, which generates the second harmonics of the light from $\mathbf{BS_1}$ passing through it. The light source is the pulsed **LASER.** The resulting pulsed beam of double frequency is fed into the **PDC** crystal.

**PDC:** Nonlinear medium which allows for the process of spontaneous parametric down conversion. This process results in two beams with light characterized by half of the frequency of the impinged beam. This process causes with a small probability per pulse of the source spontaneous emission of pairs of directionally and frequency correlated photons one into the signal beam (optical mode) and one to the idler beam. The idler photons end up in detector $\mathbf{D_t}$ while signal photons enter $\mathbf{BS_C}$.

$\mathbf{D_{A1/B1}}$, $\mathbf{D_{A2/B2}}$, $\mathbf{D_t}$**:** Detectors, which effectively detect single photons of frequency profiles specified by the filters **F.** The output of the Detectors is connected to the control system for coincidence analysis. *Notation:* $\mathbf{X_{y/z}}$ throughout the document is to generally mean $\mathbf{X_{_x}}$ and $\mathbf{X_{_y}}$.

**S:** Shutter (two), which allows blocking of the optical path. Shutters are controlled by a**CU.**

**P:** Phase shifter, which shifts the phase of the beam in a controllable and stable way. (at least 1)

**CU:** general control unit refers to control system involving coincidence/control/monitoring system, formed of a coincidence unit and a computer or a chip-system analyzing the data and reacting on them. It can be divided into three independent sub-control units $\mathbf{CU_A}$, $\mathbf{CU_B}$, $\mathbf{CU_D}$ which control respectively the following sub-systems of the device (outlined schematically in the Figure 3a):

- (interference) Station A with corresponding detectors in detector system: Group of elements which comprises one of the filters **F,** one of the shutters **S,** one of the phase shifters **P** and $\mathbf{D_{A1}}$, $\mathbf{D_{A2}}$, $\mathbf{BS_A}$
- (interference) Station B with corresponding detectors in detector system: Group of elements which comprises one of the filters **F,** one of the shutters **S,** one of the phase shifters **P** and $\mathbf{D_{B1}}$, $\mathbf{D_{B2}}$, $\mathbf{BS_B}$
- Triger: $\mathbf{D_t}$

**CU** can be realized as a single unit without such subdivision taking the role of all sub-control units $\mathbf{CU_A}$, $\mathbf{CU_B}$, $\mathbf{CU_D}$.

$\mathbf{CU_D}$**:** Control unit monitoring the detector $\mathbf{D_t}$, which sends information about detection event at the detector to control units $\mathbf{CU_A}$, $\mathbf{CU_B}$ for analysis by coincidence circuit.

$\mathbf{CU_B}$**:** Control unit, which steers the shutter **S** and the phase shifter **P,** and records the outcomes from detectors $\mathbf{D_{B1}}$ and $\mathbf{D_{B2}}$. The outputs of detectors are shared with $\mathbf{CU_A}$ for coincidence analysis. It randomly closes and opens the shutter based on pseudorandom numbers or quantum pseudo random numbers. It can also process information from other control units. It can export data to control unit $\mathbf{CU_A}$.

$\mathbf{CU_A}$**:** Control unit, which steers the shutter **S** and the phase shifter **P,** and records the outcomes from detectors $\mathbf{D_{A1}}$, $\mathbf{D_{A2}}$. It randomly closes and opens the shutter based on pseudorandom numbers (like above). It can also control **LASER,** and attenuator **A.** It can also process information from other control units and perform bitrate calculations upon this information. Processing of information includes coincidence analysis through coincidence circuit. It can export data. User can input information to this control unit about the parameters of the randomness generation like number of required fully random bits **N.**

**Classical communication channel:** Any information channel which could transmit classical information between control units $\mathbf{CU_{A/B/D}}$ and which allows for steering and controlling devices **S, P,** $\mathbf{D_{A1/a2}}$, $\mathbf{D_{b1/B2}}$. $\mathbf{D_t}$ and **BS.** This can be implemented by electrical connection cables (wiring).

**Optical path:** Physical medium through which the beam propagates. It can be realized by optical fibers or by propagating beams in the air and changing their directions with suitably placed mirrors.

In the above operational blue-print of the invention the following elements (outlined in the Figure 2): **LASER,** $\mathbf{BS_1}$, $\mathbf{BS_2}$, $\mathbf{BS_C}$, **FD, PDC, A,** and one of the filters **F** contribute as a source **So** of heralded single photon and reference coherent state. Detection of the photon in trigger $\mathbf{D_t}$ signalizes the success of the generation of heralded single photon by the source **So.** Source in general could be realized in different manner, but has to be characterized by production of heralded single photon of a strictly defined frequency profile further beam-splitted into two optical paths and simultaneous production of two beams of photons in reference coherent states which are able to interfere with generated single photon.

**Description of physical processes of generation of random key using the invention - device.**

The quantum random number generation process starts with a generation of a pulse of coherent beam by the **LASER.** Afterward, the beam impinges onto beamsplitter (**$BS_1$**) of regulated transmissivity with two output ports.

The beam of the reflection output port of **$BS_2$** passes via an attenuator **A** which allows further weakening of the intensity. Next the beam impinges into the input port of the second beamsplitter (**$BS_2$**), which should be symmetric, unbiased. Output ports distribute beam of coherent light to two measurement stations A and B controlled by **$CU_A$** and **$CU_B$** respectively. In both stations the intensity of the beam is defined by the reflectivity of the beamsplitter **$BS_1$** and the attenuator **A** and can be blocked by the shutter (**S**). It should be very low. The beam can be phase shifted by phase shifter (**P**), for calibration purposes only. The phase shift is kept fixed, which is important in the Bell test runs. The beams are also locally filtered by filters (**F**). Next the beams enter one of two entry ports of the local beamsplitters (**$BS_{A/B}$**). They play the role of local oscillators in (weak) homodyne measurements.

The transmission exit port of **$BS_1$** is connected with the frequency doubling unit, which creates generates second harmonic of the incident Output light enters a nonlinear medium in which the spontaneous parametric down conversion of type II can occur, namely a pair of entangled photons is created in idler and signal modes out of the second harmonics light. The pulse after passing the non-linear medium plays further no role and is blocked. The idler mode passes through the filter **F,** behind the filter the detector **$D_t$** is placed. If detector **$D_t$** registers a photon this heralds that in signal mode there is a photon which has the frequency profile determined by filter (**F**). Such filtering at a distance is one of the properties of parametric down conversion. This is necessary for later interference effects in homodyne measurements. The detection event of **$D_t$** is registered in control unit **$CU_D$** and information on that sent to the coincidence circuit via a classical communication channel. Transfer of the information about detection in detector **$D_t$** is responsible for the "event-ready" aspect of the following measurement as it ensures that photon is present in signal mode and marks the time gate for random bit generation. Measurement stations controlled by control units **$CU_A$** and **$CU_B$** choose their local settings based on possibly biased pseudorandom or quantum-pseudo-random numbers (which will be defined further on) by either closing ("off" setting) or opening ("on" setting) shutter (**S**) in the local oscillator beams and save the chosen setting into their memory together with the time stamp. The choice of settings is repeated with some average frequency and it is independent from the detections in detector **$D_t$,**

Signal beam (carrying the heralded single photon to induce the required entanglement in the state of exit modes of **$BS_C$**) is directed onto the balanced beamsplitter (**$BS_C$**), the output ports of which are connected with the input ports of beamsplitters in local measurement stations controlled by **$CU_A$** and **$CU_B$** into which the local oscillator fields are not fed in. The signal beam interferes with local oscillators in both local measurement stations at beamsplitters **$BS_{A/B}$**. The exit beams of the beamsplitters are monitored by detectors **$D_{A1}$** , **$D_{A2}$** and **$D_{B1}$, $D_{B2}$** by detectors which can effectively detect if there was at least a single photon in the monitored beam. Control units **$CU_A$** and **$CU_B$** save the results for each run in the memory. This finalizes the run. The control units accept as useful runs for bit generation of the raw key, or test of Bell inequality only the events which are in coincidence with time gate of the order of $1/\Delta f$ with detection at **$D_t$,** where $\Delta f$ is the frequency band of the filter **F.**

Results which do not coincide with detection at **$D_t$** and when the shutters are open can be utilized for generations of biased quantum-pseudo-random numbers (i.e. not certified) based on photon counts originating from the local weak coherent state and can be utilized for the local setting choice as an alternative for pseudo-random numbers.

Optical paths of the signal photon and local oscillator beams are tuned to be equal.

**Method**

**Description of a specific Random Number Generation Protocol to be implemented with the device:**

The protocol of random number generation in the algorithmic form:

1. The device uses via a self calibration protocol, or set upon construction of the device, optimal local oscillators' amplitudes for both measurement stations A and B and with respect to it sets local beamsplitters' transmissivities, so that a violation of the Clauser-Horne (CH) inequality is possible for the setup.
2. User chooses the number of required random bits **N.**
3. Protocol for a single run: A photon pair is generated in the PDC process. When the detector **$D_t$** placed in the idler mode dtetctorclicks, the coincident counts at stations A and B can be used to generate a random bit, or for a Bell test of quantumness of the device. The choice between the settings "on" and "off" is locally pseudo-random or alternatively quantum-pseudo-random at each of the detection stations, and stored in the memory of **$CU_{A/B}$** in the sequence **$S_{A/B}$** together with the time stamp of the protocol run generated upon setting choice. The ratio between "on" and "off" settings is arbitrarily chosen before the start of the protocol. A higher frequency of "off" settings guarantees a higher random bit generation per unit of time, as only the counts during "off-off" settings generates the raw string.

4. After measurements at stations **A** and **B** coinciding with the detection in $\mathbf{D_t}$ the following assignment of results is stored in the control unit $\mathbf{CU_{A/B}}$ memory as next element of the sequence of bits $\mathbf{R_{A/B}}$ is used:

i. For "on" setting: if a click is registered only in the local detector $\mathbf{D_{A1}}$ the local control unit assigns the result "0" and otherwise it assigns "1". The same for station B, for a click at only $\mathbf{D_{B1}}$
ii. For "off" setting control units assign "0" if any click is registered one of the two local detectors and otherwise "1".

5. Steps 3 and 4 are repeated for a chosen number of runs.
6. Control units $\mathbf{CU_A}$ and $\mathbf{CU_B}$ communicate to each other the sequence of chosen settings $\mathbf{S_{A/B}}$, obtain results $\mathbf{R_{A/B}}$. Based on the data CH expression which enters the Bell inequality is evaluated.
7. Bitrate **r** for "off-off" configuration run is calculated in terms of the so-called min-entropy using estimated value of the CH inequality violation or assessment of the optimal strategy for guessing the bit by the third parties.
8. Raw bit string **b** is prepared from bit string $\mathbf{R_A}$ using all runs with "off-off". In general, the number of possible to extract fully random bits using known methods of randomness extraction from raw bit string **b** characterized by bitrate **r** is given by some protocol specific function $N_{ext}(\underline{b}, r)$ of bit string length $\underline{b}$ and bitrate **r** (e.g. $N_{ext}(\underline{b}, r) = \underline{b} * r$ which corresponds to lossless extraction algorithms). If $N_{ext}(\underline{b}, r)$ is at least as large as the number of required bits **N,** raw data are either output with all relevant statistics for further post-processing, or post-processed by one of the control units (If extraction protocol was not specified in front of bit generation then $N_{ext}(\underline{b}, r) = \underline{b} * r$ is used.). In another case the device stores the data and repeats points 5, 6, and 7 until achieving the required number of fully random bits **N.**

Important notice: The random raw bit string **b** as it is generated only in the "off-off" setting is not affected by the detections of "on-off", "off-on", and "on-no" modes of the shutters (local oscillators) which are used only for the Bell test of non-classicality. "Off-off" is the default setting and only sometimes it changes to "on" on this or that side or both . Only this change of setting is governed by pseudo random number generators. Essentially string **b** results from certified quantumness of the single photon impinged on $\mathbf{BS_C}$. The certification is via the Bell test..

**Verification of quality of randomness I:**

In steps 6 and 7 of the protocol of random bits generation, the verification of the quality of the obtained randomness is performed. The preferred method for this device is estimation of the quality of the input state and imperfections of the measurement device based on Bell (CH) inequality violation.
First the probabilities $P(ab|x, y)$ of obtaining result *a* in station A upon chosen measurement setting *x=off, on* and result *b* in station B upon chosen measurement setting *y=off, on* are estimated by the control unit $\mathbf{CU_A}$ as frequencies i.e. ratios of the number of pairs (*a, b*) in sequence ($\mathbf{R_A}$, $\mathbf{R_B}$) corresponding to pairs (*x, y*) in sequence ($\mathbf{S_A}$, $\mathbf{S_B}$) to the length of the sequence $\mathbf{R_A}$. Similarly, probabilities $P_A(a|x)$ ( $P_B(b|y)$) of obtaining the result *a* (*b*) in station A (B) upon chosen measurement setting *x*(*y*) are estimated. Based on those the CH expression is estimated:

$$CH = P(00|on, on) + P(00|on, off) + P(00|off, on) - P(00|off, off) - P_A(0|on) - P_B(0|on).$$

Obtaining as a result $CH > 0$ demonstrates a violation of the CH Bell-type inequality, which guarantees that there is no underlying local hidden variable model could be the cause the results of the experiment. This excludes any classical model of the correlations which is in agreement with Relativity, and thus any classical description of the process. This includes also local algorithmic models, and thus generation of the counts at the detectors by a pseudo random process.
Thus, the results are fundamentally random as they have a quantum nature. What is more, local results for "off-off" scenarios in the almost ideal case, if one excludes the cases of two identical results on side **A** and side **B,** which are due to imperfections, allow generation of random bits 0 and 1 with the same probability. The maximal value of CH expression obtainable for this device can be calculated using quantum mechanics giving value $CH_{max} \approx 0.1086$. This is not a minute violation as it seems, as the Tsirelson bound for CH inequality is ≈ 0.204. Any imperfections of the device, and any fluctuations in its parameters induced internally or by environment will result in decreasing the value of obtained experimentally value $CH_{exp} < CH_{max}$. This is because such imperfections result in effectively adding a noise to the assumed single-photon state. Assuming the worst case scenario, in which all the noise results in deterministic assignment of the results and lowers the expectation value of the *CH* expression in the least possible way i.e. having expectation value 0, one can estimate the effective probability $p_{eff}$ of the measurement upon undisturbed state by bounding this probability from the above as follows:

$$p_{eff} \leq CH_{exp}/CH_{max}.$$

From this one can estimate maximal probability of guessing the outcome $P_{guess}$ as:

$$p_{guess} \approx \left(1 - CH_{exp}/CH_{max}\right) + CH_{exp}/2CH_{max}$$

This allows for estimating the minimal percentage of extractable random bits (bitrate **r**) in the raw generated bit string **b** which is approximately equal to well-known min-entropy $H_{min}$:

$$r \approx H_{min} = -log_2\left(p_{guess}\right).$$

After calculation of **r** in Step 8, calculating control unit $\mathbf{CU_A}$ checks if length of the bitstring **b** (denoted by $\underline{b}$) times **r** fulfills relation $\underline{b} * r \leq N$ and based upon that, either calls for the continuation of generation of bits, or outputs the raw bitstring **b** and bitrate **r** to the user or postprocesses the bitstring **b** using one of the well-known randomness extraction algorithms which generates using **r and b** the string of fully random bits $b_r$ and then outputs $b_r$ to the user. This procedure effectively compensates for imperfections of the device.

**Verification of quality of randomness II:**

An alternative method can be used to verify the quality of the extraction of fully random bit string $b_r$ from **b.** In such scenario probabilities $P(x, y)$ are estimated in the same way as in the previous section. This is followed by performing all possible decompositions of the distribution $P(x, y)$ in terms of extremal points of no-signaling polytope by control unit $\mathbf{CU_A}$ using pseudo-inverse as described in: [Marek Winczewski, Tamoghna Das, John H. Selby, Karol Horodecki, Paweł Horodecki, Łukasz Pankowski, Marco Piani, Ravishankar Ramanathan , Complete extension: the non-signaling analog of quantum purification, arXiv:1810.02222 (2018)], storing the information about maximal probabilistic contribution of deterministic local boxes $p_{det}$. Value $p_{det}$ corresponds to the optimal guessing strategy of the bit by the third parties. This allows for device-independent method of accessing the maximal probability of guessing bit $p_{guess}$ as this method is based solely on obtained probabilities and not on the specific construction of the setup. Bound on $p_{guess}$ can be calculated as:

$$p_{guess} \leq p_{det} + (1 - p_{det})/2.$$

Then control unit $\mathbf{CU_A}$ assigns the bitrate r as min-entropy based on calculated bound, as it bounds from below the real value of the bitrate:

$$r = -log_2(p_{det} + (1 - p_{det})/2).$$

Upon this calculation control unit $\mathbf{CU_A}$ starts the step 8 of the algorithm. This method gives lower estimates of *r* than the method described in the previous section as it optimizes also upon post-quantum realizations of the system resulting in more secure randomness.. However, the method needs longer time for generation of specific number of random bits *N* as this method results in lower values of *r.* But this is safer.

**Example 2**

The abbreviations were explained before.

The scheme of an example of realization is presented in Figure 3. Control unit is implemented as a one control unit **CU** presented on Figure 3b based on a computer (**PC**) with connected necessary devices described in the following. In particular the control unit possess the following features: input, output coincidence circuit with clock (**CC**), memory (**M**), computing capabilities coming from the processor of the PC (**CPU**), pseudo number generator (**PRNG**) and hardware drivers for the control over the other steerable devices in the device described below (**LASER,** shutters **S**) and for receiving the input from them (detectors $\mathbf{D_{A1/B1}}$, $\mathbf{D_{A2/B2}}$, $\mathbf{D_t}$). All active elements (LASER, shutters **S,** detectors $\mathbf{D_{A1/B1}}$, $\mathbf{D_{A2/B2}}$, $\mathbf{D_t}$, **CU**) are powered by power supply **PSU.**

All beamsplitters are chosen as beamsplitters with set transmissivity, in particular: $\mathbf{BS_A}$, $\mathbf{BS_B}$ with transmissivity 0.025, $\mathbf{BS_2}$, $\mathbf{BS_C}$ with transmissivity 0.5 and $\mathbf{BS_1}$ with transmissivity 0.99. The shutters **S** in front of the beamsplitters $\mathbf{BS_A}$, $\mathbf{BS_B}$ are mechanical shutters which block the beam completely when closed and transmit the beam completely when open. Shutters are connected to **CU.** Single pulsed quasi-monochromatic **LASER** is chosen to work with central frequency **f** (frequency is tuned to match the frequency for which detectors work with the highest efficiency), pulse time length **t,** and power **p.** Attenuator **A** is chosen to attenuate the beam in such a way that the average photon number in the beam is *20*.

Phase shifter **P** in station A and B performs phase shift *0*. The Frequency doubler is chosen to work in the range of frequencies containing **f** and with efficiency higher than *15%.* For the **PDC** process the BBO nonlinear crystal is chosen which generates from the beam coming from frequency doubler two beams of light frequency **f** (idler and signal beams). The transmitted beams of light frequency **f** and its second harmonic are blocked. All three filters **F** have the same characteristics and filter the frequencies around **f** within the frequency band. All five detectors $\mathbf{D_{A1/B1}}$, $\mathbf{D_{A2/B2}}$, $\mathbf{D_t}$ are chosen to be superconducting nanowire single-photon detectors which are able to detect single photon in range around **f** with high efficiency 98% and the dead time lower than time between the laser pulses. The optical paths are realized using the optical fibers, and classical communication channels using electric connection wires. The optical path of the photon in the signal beam to the detectors is chosen to be equal to the optical path of the idler photon to the detector $\mathbf{D_t}$ within a tolerance of an order of magnitude shorter than the optical length of the pulses leaving the filters $\Delta L = c/\Delta f$. The total optical path from LASER to the detectors of all beams in the system is set to be equal within the same tolerance.

The output of the LASER is connected to the input port of beamsplitter $\mathbf{BS_1}$. The first output port (reflected beam) of $\mathbf{BS_1}$ is connected to Attenuator **A** and then to **BSz.** The first output port of $\mathbf{BS_2}$ is connected to shutter **S** of the measurement station A and then to phase shifter **P** followed by filter **F** which is connected to the input port of $\mathbf{BS_A}$. The second output port of $\mathbf{BS_2}$ **is** connected to shutter **S** of the measurement station B and then to phase shifter **P** followed by filter **F** which is connected to the input port of $\mathbf{BS_B}$. The second output port (transmitted beam) of $\mathbf{BS_1}$ is connected to frequency doubler **FD** and then to **BBO** crystal from which the idler beam is propagated towards detector $\mathbf{D_t}$ and the signal beam towards beamsplitter $\mathbf{BS_C}$. The detector $\mathbf{D_t}$ is connected to **CU** in particular to the coincidence circuit **CC.** The first output port of $\mathbf{BS_C}$ is connected to the second input port of $\mathbf{BS_A}$, and the second output port of $\mathbf{BS_C}$ is connected to the second input port of $\mathbf{BS_B}$. The output ports of $\mathbf{BS_A}$ are connected to the detectors $\mathbf{D_{A1}}$, $\mathbf{D_{A2}}$ as in Figure 3a. The output ports of $\mathbf{BS_B}$ are connected to the detectors $\mathbf{D_{B1}}$, $\mathbf{D_{B2}}$ as in Figure 3a. The detectors $\mathbf{D_{A1/B1}}$, $\mathbf{D_{A2/B2}}$ are connected to **CC.**

The device that is shown on Figure 3a, and 3b starts with the input from the user of the number of required random bits **N. CU** initiates **LASER.** Single pulsed near monochromatic **LASER** is chosen to work with central frequency **f** (frequency is tuned to match the frequency for which detectors work with the highest efficiency), pulse time length **t,** and power **p.** Control unit **CU** chooses pseudo-random settings of the shutters with ratio 9:1 of "off" to "on" settings. This is done for each shutter separately. The change of the settings is simultaneous in both measurement stations and occurs with constant frequency $\mathbf{f_s}$. The particular settings are stored in the memory as a sequence ($\mathbf{S_A}$, $\mathbf{S_B}$) with time stamps. The **CC** registers outputs from detectors $\mathbf{D_{A1/B1}}$, $\mathbf{D_{A2/B2}}$, $\mathbf{D_t}$ saving the outcomes coinciding with detection in $\mathbf{D_t}$ up to time gate $1/\Delta f$ to memory in sequence ($\mathbf{R_A}$, $\mathbf{R_B}$) with a timestamp that marks the corresponding setting choice. The sequence ($\mathbf{R_A}$, $\mathbf{R_B}$) is prepared using on the following key:

i. For "on" setting: if in station A (B) a click is registered only in the local detector $\mathbf{D_{A1}}$ ($\mathbf{D_{B1}}$)then **CU** adds "0" to sequence $\mathbf{R_A}$ ($\mathbf{R_B}$)otherwise it adds "1".

ii. For "off" setting the control unit adds "0" to sequence $\mathbf{R_A}$ ($\mathbf{R_B}$) if any click is registered in station A (B) and otherwise "1".

The control unit **CU** keeps LASER on (producing new pulses) repeating the procedure until number of detections in the detector $\mathbf{D_t}$ reaches 10*N or at least 1000. The string of bits **b** is prepared by **CU** from $\mathbf{R_A}$ by selecting results only corresponding to the ("off" ,"off") settings combination. As an additional safety measure CU can treat events with results 1 at station A and 1 at station B for the ("off" ,"off") settings as unsuccessful bit generation runs (as this combination can appear only from imperfections) and not include them in **b,** however, those events are still used in further evaluation of bitrate **r.** Afterwards **CU** evaluates bitrate **r** corresponding to obtained raw bit string **b** with first or second randomness verification algorithm and stores it in the memory (bitrate calculations on particular examples of bit generations is presented below). Further **CU** checks the number of obtained random bits $\underline{b} * r$ where $\underline{b}$ is the number of results corresponding to setting configuration ("off" ,"off") and decides whether to continue the generation procedure (switching on the **LASER** for next $10 * (N - b * r)$ detections of idler photons) or to extract random bit string $\mathbf{b_r}$ followed by saving it into the memory. After a random bit string $\mathbf{b_r}$ is generated **CU** outputs it to the user.

Consider the successful bit generation runs and self-testing runs assuming that energy profile of beam generated by **LASER** exactly matches characteristics of filters **F** and taking approximation that detectors have 100% efficiency. Let us denote the relevant optical modes (see Figure 3) as follows: $a_S$ signal mode, $a_t$ trigger (idler) mode, $a_A$, $a_B$ output mode of $\mathbf{BS_C}$ directed towards stations A and B respectively, $b_A$, $b_B$ outputs modes of $\mathbf{BS_2}$ fed into stations A and B respectively, $a_1$, $a_2$, $b_1$, $b_2$. Output modes of local beamspliters fed into detectors $\mathbf{D_{A1}}$, $\mathbf{D_{A2}}$, $\mathbf{D_{B1}}$, $\mathbf{D_{B2}}$ respectively. Note that beamsplitters perform the following transformation of creation operators of some input modes $a_{in1}$, $a_{in2}$ to output modes $a_{out1}$, $a_{out2}$ (transmitted, reflected mode):

$$\begin{pmatrix} \hat{a}^{\dagger}_{out1} \\ \hat{a}^{\dagger}_{out2} \end{pmatrix} = \begin{pmatrix} \sqrt{T} & -i\sqrt{R} \\ -i\sqrt{R} & \sqrt{T} \end{pmatrix} \begin{pmatrix} \hat{a}^{\dagger}_{in1} \\ \hat{a}^{\dagger}_{in2} \end{pmatrix},$$

Where *R, T* stands for reflectivity and transmissivity of the beamsplitter.

The beam of the coherent light is produced by the **LASER.** This beam after passing through **$BS_1$, A, $BS_2$, FD, PDC** the state of the relevant optical modes is given approximately by:

$$\sqrt{1-p}|\alpha e^{\mathrm{i}\pi/2}\rangle_{b_A}|\alpha e^{\mathrm{i}\pi}\rangle_{b_B}|0\rangle_{a_s}|0\rangle_{a_t}+\sqrt{p}|\alpha e^{\mathrm{i}\pi/2}\rangle_{b_A}|\alpha e^{\mathrm{i}\pi}\rangle_{b_B}|1\rangle_{a_s}|1\rangle_{a_t},$$

Where p stands for probability of generating photon pair in **PDC,** $|n\rangle_a$ stands for state with n photons in mode *a* and $|\alpha\rangle_b$ stands for coherent state with amplitude $\alpha$ where in this example $|\alpha| = \sqrt{10}$. The conditional state upon detecting photon in trigger mode by detector **$D_t$** is given by

$$|\alpha e^{\mathrm{i}\pi/2}\rangle_{b_A}|\alpha e^{\mathrm{i}\pi}\rangle_{b_B}|1\rangle_{a_s},$$

what corresponds to the situation of successful bit generation/self-testing run. If state $|0\rangle_{a_t}$ is measured in trigger mode run was unsuccessful and **CU** does not save such result into the sequence of results (**$R_A$,$R_B$**). In the successful case the beam after passing through **$BS_C$** is given by:

$$(|\alpha e^{\mathrm{i}\pi/2}\rangle_{b_A}|\alpha e^{\mathrm{i}\pi}\rangle_{b_B}|1\rangle_{a_A}|0\rangle_{a_B}+i|\alpha e^{\mathrm{i}\pi/2}\rangle_{b_A}|\alpha e^{\mathrm{i}\pi}\rangle_{b_B}|0\rangle_{a_A}|1\rangle_{a_B})\frac{1}{\sqrt{2}}.$$

Depending on the setting choice of given stations the state can be modified. If shutter in station A is closed i.e. "off" setting we have $|\alpha e^{i\phi}\rangle_{b_A}$ modified to $|0\rangle_{b_A}$ and analogously for station B. For every setting change the information of chosen setting is saved into memory in sequence (**$S_A$, $S_B$**) with time stamp which specifies when the given setting was used. Upon considered state the beamsplitting operation is performed of described above form. On this beamspllited state detectors perform photo detection. If run is bit generating ("off-off" setting) and state is efectively given by:

$$(|0\rangle_{b_A}|0\rangle_{b_B}|1\rangle_{a_A}|0\rangle_{a_B}-i|0\rangle_{b_A}|0\rangle_{b_B}|0\rangle_{a_A}|1\rangle_{a_B})\frac{1}{\sqrt{2}}.$$

if detectors in station A effectively detect state $|0\rangle_{b_A}|1\rangle_{a_A}$ (any of the detectors **$D_{A1}$**, **$D_{A2}$** detected photon) what happens with probability ½ then **CU** saves into sequence **$R_A$** result 0 and in such case there is no click in the detectors **$D_{B1}$**, **$D_{B2}$** as single photon was detected in station A and thus **CU** will save result 1 from station B into **$R_B$.** Simultaneously the time stamp corresponding to the obtained results is saved by **CU** for later identification of the used setting. If no photons were detected in station A and photon was detected in station B result 0 is saved into **$R_A$** and result 1 to **$R_B$.**

Analogously results are saved into (**$R_A$,$R_B$**) for other setting choices using the described above result assignment for "off" and "on" settings. Then after reaching the length of the sequence **$R_A$** to be 10***N** (e.g. N=1000), the **CU** performs self-test by computing bitrate estimating number of fully random bits generated. Example of this procedure is described below.

**The first randomness verification algorithm (bitrate calculation):**

The following expression is evaluated:

$CH = P(00|on, on) + P(00|on, off) + P(00|off, on) - P(00|off, off) - P_A(0|on) - P_B(0|_{on})$,

which results for the example in the value *CH=0.09 which is lower than the maximal one.* Obtaining lower values could result from imperfections of the system and outside influences of environment, The specific values of the $P(a, b|x, y)$ are estimated as:

$$\frac{n_{\{xA\}}n_{\{yB\}}}{N_r},$$

where $n_{\{xA\}}$ is a number of outcomes "a" in sequence **$R_A$** corresponding to setting "x" in **$S_A$**, $n_{\{yB\}}$ is a number of outcomes "b" in sequence **$R_B$** corresponding to setting "y" in **$S_B$** and $N_r$ is the length of **$R_A$** Values $P_A(0|x)$ and $P_B(0|y)$ are evaluated as:

$$P_A(a|x) = \frac{n_{\{xA\}}}{N_r}, \quad P_B(b|y) = \frac{n_{\{yB\}}}{N_r}.$$

Then the bitrate is calculated

$$r = -log_2\left(\left(1 - \frac{CH}{0.1086}\right) + \frac{CH}{0.2172}\right) = -log_2(0.5856) = 0.7719.$$

The string of bits **b** is prepared from $\mathbf{R_A}$ by selecting results only corresponding to the ("off" ,"off") settings combination. Let us assume that we obtained $\underline{b}$ = 9000, where $\underline{b}$ is the length of **b,** then $\underline{b}$*r=6 947,1>N. Therefore, the CU performs a well known randomness extraction algorithm using **b** and **r** generating fully random bit string $\mathbf{b_r}$ which is then outputted to the user by CU.

**The second randomness verification algorithm (bitrate calculation):**

The following table is evaluated using formulas from the previous algorithm

| P(00 \| off,off) | P(10 \| off,off) | P(00 \| on,off) | P(10 \| on,off) |
|---|---|---|---|
| P(01 \| off,off) | P(11 \| off,off) | P(01 \| on,off) | P(11 \| on,off) |
| P(00 \| off,on) | P(10 \| off,on) | P(00 \| on,on) | P(10 \| on,on) |
| P(01 \| off,on) | P(11 \| off,on) | P(01 \| on,on) | P(11 \| on,on) |

Let the result be:

| 0 | 1/2 | 0.3922 | 0.1077 |
|---|---|---|---|
| 1/2 | 0 | 0.1023 | 0.3976 |
| 0.3922 | 0.1023 | 0.3063 | 0.1882 |
| 0.1077 | 0.3976 | 0.1882 | 0.3170 |

Decomposing this box into local and non-local boxes using methods from [Marek Winczewski, Tamoghna Das, John H. Selby, Karol Horodecki, Paweł Horodecki, Łukasz Pankowski, Marco Piani, Ravishankar Ramanathan , Complete extension: the non-signaling analog of quantum purification, arXiv:1810.02222 (2018)] yields the maximal probability of local boxes $p_{det}$ = 0.7968. Based on this most conservative estimate for the bitrate is estimated with:

$$r = -log_2\left(p_{det} + \frac{(1-p_{det})}{2}\right) = 0.1545.$$

Now device calculates the number of fully random bits $\underline{b}$*r=9000*0.1545 = 1391.1 > *N*. Therefore, the CU performs a well known randomness extraction algorithm using **b** and **r** generating fully random bit string $\mathbf{b_r}$ which is then output to the user by CU.

The work is part of 'International Centre for Theory of Quantum Technologies' project (contract no. 2018/MAB/5), which is carried out within the International Research Agendas Programme (IRAP) of the Foundation for Polish Science (FNP) co-financed by the European Union from the funds of the Smart Growth Operational Programme, axis IV: Increasing the research potential (Measure 4.3).

## Claims

1. A quantum random number generation system for self-testing generation of truly random bit strings comprising the following parts:

   - pulsed heralded single photon and weak coherent states source (**So**) for generation of a single photon passed to

beamsplitter (**BS$_C$**), and two reference coherent states which enable weak homodyne measurement,
- interferometer comprising parts connected by optical paths:

◦ two interference stations A and B which mix the beams of reference coherent states with the beams derived from the beamsplitter (**BS$_C$**) carrying an entangled superposition of single photon excitations;

- set of photo detectors for monitoring all exit optical modes of the device while each of detectors is configured to detect single photons;
- control unit (**CU**) that is connected to source (**So**) which monitors and controls its work and is connected to interference stations A and B and can control their settings, where the control unit (**CU**) is configured for pseudorandom number generation, result of which is then used for the choice of settings of interference stations A and B, and the setting choice is saved into a memory, or the control unit (**CU**) is configured for producing quantum-pseudo-random numbers based on the failed quantum random number generation runs for the use in the setting choice at interference stations A and B, additionally the control unit (**CU**) is configured for generation of fully random bits (**N**) and raw random bit string (**b**) from collected data from the interferometer, and comprises

o a coincidence circuit which gathers information from system of detectors through classical communication channels and analyzes and saves results, detection events and their coincidences, into a memory,

- wherein the control unit (CU) is configured for performing Bell-test upon obtained data using a Clauser-Horne, CH, inequality, the obtained result of the test can also be used by the control unit (CU) to modify the settings of the device in order to calibrate the system, and the control unit (CU) is configured for performing self-test based on obtained results and thus, observed or not Bell non-classicality, by computing the minimum entropy which determines the bitrate (r),wherein each of the interference stations A and B comprise:

• at least one shutter (**S**) for blocking of the optical path and that is controlled by a control unit (**CU**),
• at least one phase shifter (**P**) for shifting the phase of the beam in a controllable and stable way, preferably controlled by the control unit (**CU**),
• one tuneable or not-tuneable optical beamsplitter (**BS$_{A/B}$**), preferably in a form of optical two-input-two-output port device controlled by the control unit (**CU**),
• at least one filter (**F**), which transmits light with a strictly defined frequency profile corresponding to the filter in the source (**So**).

**2.** The system according to the claim 1, wherein the control unit (**CU**) is configured for outputting the raw random bit string (**b**) and calculated bitrate r to the user for randomness extraction procedure, or performing randomness extraction procedure by itself and output quantum fully random bit string (**b$_r$**).

**3.** The system according to any one of claims 1-2, wherein the

source (**So**) comprises the following elements connected by optical paths:

- one laser (**LASER**) controlled by the control unit (**CU**) for producing a pulsed coherent beam of light into beamsplitter (**BS$_1$**)
- one tuneable or not-tuneable optical beamsplitter (**BS$_1$**), preferably in a form of optical two-input-two-output port device,
- one tuneable or not-tunable optical beamsplitter (**BS$_2$**), preferably in a form of symmetric optical two-input-two-output port device,
- at least one attenuator (**A**), preferably with controllable transmissivity and controlled by the control unit (**CU**),
- one tuneable or not-tuneable optical two-input-two-output port beamsplitter (**BS$_C$**), preferably symmetric beamsplitter for distributing the photons among interference stations,
- one frequency doubling unit (**FD**), which doubles the frequency of a part of incoming beam which originates from the (**LASER**) by a second harmonic generation,
- at least one nonlinear medium (**PDC**) which allows for the process of spontaneous parametric down conversion which generates correlated single-photons in two beams redirected to detector (**D$_t$**) and to the beamsplitter (**BS$_C$**),
- at least one filter (**F**), which transmits light with a strictly defined frequency profile,

and additionally the unit of detectors comprises:

- five photo detectors (**$D_{A1}$, $D_{A2}$, $D_{B1}$, $D_{B2}$, $D_t$**) for detecting single photons of frequency profiles specified by filter (**F**) while the output of detectors is connected to the control unit (**CU**) for coincidence analysis, detection of the photon by (**$D_t$**) signalizes successful generation of heralded single photon state, while detectors (**$D_{A1}$, $D_{A2}$ and $D_{B1}$, $D_{B2}$**) detect photons in the outputs of the interference stations A and B respectively.

**4.** A method for generation of string of quantum random numbers to be used with system according to claim 1 comprising the following steps:

a) for specific number of times requesting by the control unit (**CU**) the source (So) to sequentially generate of the heralded single photon states and coherent states, all of which are then transmitted to the interference stations A and B,
b) in the meantime changing pseudo randomly the settings of interference stations A and B by the control unit (**CU**) by choosing between two settings "on", "off", where "off" setting stands for blocking input local reference coherent state pulse using shutter (s), for each station independently and saving the choice of the setting to the memory with time stamp,
c) for each successfully heralded single photon generation the outcomes from the detectors are stored in the memory with time stamp which allows for identification of corresponding setting to the given run; as an outcome two bits are created, one bit for detection pattern in output ports of each stations A and B, the following assignment of results stored in the control unit (**CU**) memory is used:

◦ for "on" setting: if photons are registered only in the local detector **($D_{A1/B1}$)** control unit (**CU**) assigns the result "0" and otherwise it assigns "1",
◦ for "off" setting control units assign "0" if any photon is registered and otherwise "1",

d) preparing in the control unit (CU) raw bit string (**b**) from the results for runs in which settings for both interference stations were "off", from each successful such run only one bit of the string is produced, it is the result obtained at one, specified by the protocol, interference station, e.g. A, and at this stage, preferably, removing from raw bit string b elements corresponding to events with results 1 and results 0 in both local stations simultaneously as additional self-correction layer,
e) performing self-test by calculation of bitrate (**r**) in terms of min entropy using either estimation of bit guessing probability based on the violation of CH inequality or decomposition of correlations in non-signalling polytope in the control unit (CU),
f) comparing if the number $N_{ext}$(b, r) of possible to extract fully random bits from s raw bit string (**b**) estimated using bitrate (**r**) is higher than the number of fully random bits requested, while if yes the control unit (CU) outputs the raw random bit string (b) and calculated bitrate (r) or performs on them a randomness extraction protocol and outputs (**$b_r$**), otherwise steps a)-f) are repeated adding the new data to the data obtained in the previous repetitions.

**5.** The method according to claim 4, wherein the method for self-test comprises steps:

- estimating in the control unit (CU) probabilities P(ab|x,y) of obtaining result a in station A upon chosen measurement setting x and result b in station B upon chosen measurement setting y as frequencies of their appearance in the obtained data,
- estimating in the control unit (CU) bitrate (**r**) using one of the following steps:

i. estimation through violation of CH inequality:

• estimating in the control unit (CU) probabilities $P_A(a|x)$ ($P_B(b|y)$) of obtaining the result a(b) in station A(B) upon chosen measurement setting x(y) and estimates the CH expression:

$$CH = P(00|on,on) + P(00|on,off) + P(00|off,on) - P(00|off,off) - P_A(0|on) - P_B(0|on),$$

• the control unit (CU) preferably computes:

$$r = -log_2\left(\left(1 - \frac{CH}{0.1086}\right) + \frac{CH}{0.2172}\right).$$

ii. estimation through decomposition of correlations into non-signalling polytope:

- estimating in the control unit (CU) the maximal probability $p_{det}$ of contribution of local boxes in decomposition of correlations P(ab|x,y) into extremal points of non-signalling polytope,
- computing in the control unit (CU)

$$r = -log_2\left(p_{det} + \frac{(1-p_{det})}{2}\right).$$

## Patentansprüche

**1.** Ein Quantensystem zur Erzeugung von selbst-verifizierten Generierung von echt zufälligen Folgen von Bits, bestehend aus den folgenden Komponenten:

- eine gepulste Quelle für heraldete Einzelphotonen und schwache kohärente Zustände (**So**) zur Erzeugung von Einzelphotonen, die einem Strahlteiler (**BS$_C$**) zugeführt werden, sowie zweier Referenz-Kohärenzzustände, die eine schwache homodyne Messung ermöglichen;
- ein Interferometer, bestehend aus Komponenten die über optische Pfade verbunden sind:

  ◦ zwei Interferenzstationen A und B, welche die kohärenten Referenzstrahlen mit dem Signal des Strahlteiler (**BS$_C$**) mischen, was zu einer verschränkten Superposition von Einzelphotonenanregungen führt;

- ein Satz von Photodetektoren zur Überwachung sämtlicher optischer Ausgangsmoden der Vorrichtung, wobei jeder Detektor zur Detektion von Einzelphotonen ausgelegt ist;;
- eine Kontrolleinheit (**CU**), die mit der Quelle (**So**) verbunden ist und deren Funktion überwacht; sie ist auch mit den Interferenzstationen A and B verbunden und kann deren Einstellungen kontrolliere. Wenn die Kontrolleinheit (**CU**) für die Erzeugung von Pseudozufallszahlen konfiguriert ist, werden die Ergebnisse zur Auswahl der Einstellungen der Interferenzstationen verwendet. Die Kontrolleinheit (**CU**) kann auch zur Erzeugung von Quanten-Pseudozfallszahlen auf Grundlage der fehlgeschlagenen Versuche zur Einstellung der Intereferenzstationen verwendet werden. Zusätzlich kann die Kontrolleinheit (**CU**) zur Erzeugung von echten Zufallsbits (**N**) und Rohzufallsbitfolgen (**b**) aus den gesammelten Daten der Interferometer konfiguriert werden. Die Kontrolleinheit (**CU**) besteht aus

  ◦ einem Koinzidenzschaltkreis, der Informationen der Detektoren über klassische Kommunikationskanäle sammelt und analysiert; die Daten der Detektionsereignisse und deren Koinzidenzen werden im Speicher abgelegt.

Wenn die Kontrolleinheit zur Durchführung von Bell-Tests der gesammelten Daten unter Verwendung der Bell-Ungleichung von Clauser-Horne (CH) konfiguriert ist, kann das Testergebnis auch von der Kontrolleinheit (**CU**) dazu verwendet werden, um die Einstellungen des Systems zu verändern und damit das System zu kalibrieren; wenn die Kontrolleinheit zur Durchführung eines Selbsttests konfiguriert ist, kann abhängig davon, ob eine Bellsche Nichtklassikalität beobachtet wurde oder nicht, durch Berechnung der Minimum-Entropie die Bitrate (**r**) bestimmt werden. Die Interferenzstationen A und B bestehen aus:

- mindestens einer durch die Kontolleinheit (**CU**) gesteuerten optischen Blende (**S**), um den optischen Pfad zu blockieren;
- mindestens einem Phasenelement (**P**) zur Verschiebung der Phase des Strahls in einer kontrollierten und stabilen Art, vorzugsweise von der Kontrolleinheit (**CU**) gesteuert;
- einem einstellbaren oder nicht einstellbaren optischen Strahlteiler (**BS$_{A/B}$**), vorzugsweise realisiert durch eine von der Kontrolleinheit (**CU**) gesteuerten optischen Einheit mit zwei Eingängen und zwei Ausgängen;
- mindestens einem Filter (**F**), der nur Licht mit einem streng definierten Frequenzprofil durchlässt, das der Quelle (**So**) entspricht.

2. Das System gemäß Anspruch 1, wobei die Kontrolleinheit (**CU**) entweder zur Ausgabe einer Rohzufallsbitfolge (**b**) and berechneter Bitrate r konfiguriert ist, die der Benutzer für ein Verfahrung zur Extraktion von Zufall verwenden kann, oder die Kontrolleinheit (**CU**) für die Extraktion von Zufall selbst durch und gibt eine echte zufällige Bifolge ($\mathbf{b_r}$) aus.

3. Das System gemäß Anspruch 1 oder 2, wobei die Quelle (**So**) aus den folgenden durch optische Pfade verbundenen Elementen besteht:

- ein Laser (**LASER**), der durch die Kontrolleinheit (**CU**) gesteuert wird, zur Erzeugung eines gepulsten kohärenten Lichtstrahls für den Strahlteiler ($\mathbf{BS_1}$) erzeugt;
- einen einstellbaren oder nicht einstellbaren optischen Strahlteiler ($\mathbf{BS_1}$), vorzugsweise realisiert durch eine Einheit mit zwei Eingängen und zwei Ausgängen;
- einem einstellbaren oder nicht einstellbaren optischen Strahlteiler ($\mathbf{BS_2}$), vorzugsweise realisiert durch eine symmetrische Einheit mit zwei Eingängen und zwei Ausgängen;
- mindestens einem Abschwächer (**A**), vorzugsweise mit durch die Kontrolleinheit (**CU**) gesteuerter Transmissivität;,
- einem einstellbaren oder nicht einstellbaren optischem Strahlteiler ($\mathbf{BS_C}$) mit zwei Eingängen und zwei Ausgängen zur vorzugsweise symmetrischen Weiterleitung der Photonen an die Interferenzstationen;
- eine Frequenzverdopplungseinheit (**FD**), die die Frequenz eines Teils des vom (**LASER**) stammenden Eingangsstrahls mittels *second harmonic generation* (SHG) verdoppelt.
- mindestens ein nichtlineares Medium (**PDC**), durch das der Prozess der spontanen Abwärtskonversion ermöglicht werden, der korrelierte Einzelphotonen in zwei Strahlen erzeugt, die an einen Detektor ($\mathbf{D_t}$) and den Strahlteiler ($\mathbf{BS_C}$) weitergeleitet werde;
- mindestens einen Filter (**F**), der nur Licht mit einem streng definierten Frequenzprofil durchlässt,

Zusätzlich besteht die Detektoreinheit aus

- fünf Photodetektoren ($\mathbf{D_{A1}}$, $\mathbf{D_{A2}}$, $\mathbf{D_{B1}}$, $\mathbf{D_{B2}}$, $\mathbf{D_t}$) zur Detektion einzelner Photonen mit einem durch den Filter (**F**) festgelegten Frequenzprofil; die Ausgänge der Detektoren sind mit der Kontrolleinheit (**CU**) zur Koinzidenzanalyse verbunden sind. Detektion eines Photons durch ($\mathbf{D_t}$) signalisiert die erfolgreiche Erzeugung eines heraldeten einzelnen Photons, währen die Detektoren ($\mathbf{D_{A1}}$, $\mathbf{D_{A2}}$ **and** $\mathbf{D_{B1}}$, $\mathbf{D_{B2}}$) Photonen in den Ausgängen der Interferenzstationen A und B detektieren.

4. Eine Methoden zur Erzeugung einer Folge von Quantenzufallszahlen A zur Verwendung in einem System gemäß Anspruch 1, bestehend aus den folgenden Schritten:

a) Für eine spezifizierte Anzahl wird soll die durch die Kontrolleinheit (**CU**) gesteuerte Quelle (**S**) nacheinander heraldete Einzelphotonenzustände und kohärente Zustände erzeugen, die an die Interferenzstationen A und B weitergeleitet werden;
b) Gleichzeitig werden die Einstellungen der Interferenzstationen A und B durch die Kontrolleinheit (**CU**) pseudozufällig und unabhängig voneinander entweder "on" und "off" gewählt (wobei die Einstellung "off" der Blockierung des lokalen kohärenten Referenzstrahls durch die Blende (S) entspricht). Die Einstellung wird mit einem Zeitstempel versehen gespeichert.
c) Für jede erfolgreiche heraldete Generierung eins Einzelphotons werden die Ausgaben der Detektoren zusammen mit einem Zeitstempel gespeichert, was die Identifikation der korrespondieren Einstellungen erlaubt.; die Ausgabe besteht aus zwei Bits: ein Bit für das Detektionsmusters in den Ausgängen der Stationen A and B, das von der Kontrolleinheit (**CU**) wie folgt bestimmt wird:

◦ Für die Einstellung "on": falls Photonen nur in den lokalen Detektoren ($\mathbf{D_{A1/B1}}$) beobachtet werden, die Kontrolleinheit (**CU**) liefert das Ergebnis "0", andernfalls "1",
◦ Für die Einstellung "off", die Kontrolleinheit (**CU**) liefert das Ergebnis "0" falls ein Photon detektiert wurde, anderenfalls "1",

d) Die Kontrolleinheit (*CU*) erzeugt eine Rohbitfolge (**b**) aus den Ergebnissen der Durchläufe, for die Einstellung für beide Intereferenzstationen "off" war. Für jeden erfolgreichen dieser Durchläufe wird nur ein Bit der Folge generiert. Es ist das Ergbebnis einer der durch das Protokoll bestimmen Intereferenzstationen, beispielsweise A. Vorzugsweise werden in diesem Schritt zur zusätzlichen Selbstkorrektur Bits aus der Rohfolge **b** entfernt, falls die Ergebnisse 1 und 0 in beiden lokalen Stationen gleichzeitig auftreten.
e) Durchführung eines Selbsttests mittels Bestimmung der Bitrate (**r**) auf Basis der Minimumentropie, entweder mittels Abschätzung der Ratewahrscheinlichkeit ausgehen on der Verletzung der CH-Ungleichung oder mittels

der Zerlegung der Korrelation im Nicht-Signalierungs-Polytope
f) Vergleich, ob die Zahl $N_{ext}$(b, r) der aus dem der Rohbitfolge (**b**) extrahierbaren echt zufälligen Bits gemäß der abgeschätzten Bitrate (**r**) größer ist als die Zahl der angeforderten echten Zufallsbit ist. Falls ja, gibt die Kontrolleinheit (**b and r**) aus oder führt ein bekanntes Protokoll zur Extraktion von Zufall aus und gibt ($\mathbf{b_r}$) aus; anderenfalls werden die Schritte a)-f) wiederholt und zusätzliche Daten generiert.

**5.** Das Verfahren gemäß Anspruch 4, wobei das Verfahren für den Selbsttest aus den folgenden Schritten besteht:

- Abschätzung der Wahrscheinlichkeiten P(ab|x,y) für das Ergebnis a in der Station A mit der Einstellung und das Ergebnis b in der Station mit der Einstellung y über die Häufigkeit der in den Daten in der Kontrolleinheit (**CU**).
- Abschätzung der Bitrate (**r**) durch die Kontrolleinheit (CU) mittels der folgenden Schritte:

i. Abschätzung über die Verletzung der CH-Ungleichung:

• Abschätzung der Wahrscheinlichkeiten $P_A(a|x)$ und $P_B(b|y)$ für die Ergebnisse a bzw. b in den Stationen A bzw. B mit den Einstellungen x bzw. y in der Kontrolleinheit mittels der CH-Gleichung:

$$CH = P(00|on,on) + P(00|on,off) + P(00|off,on) - P(00|off,off) - P_A(0|on) - P_B(0|on),$$

,

• Die Kontrolleinheit (CU) berechnet vorzugsweise:

$$r = -log_2\left(\left(1 - \frac{CH}{0.1086}\right) + \frac{CH}{0.2172}\right).$$

ii. Abschätzung über die Zerlegung der Korrelationen im Nicht-Signalierungs-Polytope:

• Abschätzung der maximalen Wahrscheinlichkeit $p_{det}$ des Beitrags der lokalen Boxen in der Zerlegung der Korrelationen P(ab|x,y) in Extrempunkte des Nicht-Signalisierungs-Polytops in der Kontrolleinheit (**CU**).
• Berechnung der Rate in der Kontrolleinheit (**CU**)

$$r = -log_2\left(p_{det} + \frac{(1-p_{det})}{2}\right).$$

**Revendications**

**1.** Système de génération de nombres aléatoires quantiques destiné à la génération auto-testée de chaînes de bits véritablement aléatoires, comprenant les parties suivantes :

- une source pulsée de photons uniques annoncés et d'états cohérents faibles (**So**) destinée à générer un photon unique transmis au séparateur de faisceau ($\mathbf{BS_C}$), ainsi que deux états cohérents de référence permettant une mesure homodyne faible,
- un interféromètre comprenant des parties reliées par des trajets optiques :

◦ deux stations d'interférence A et B qui mélangent les faisceaux des états cohérents de référence avec les faisceaux provenant du séparateur de faisceau ($\mathbf{BS_C}$), portant une superposition intriquée d'excitations à photon unique ;

- un ensemble de photodétecteurs destiné à surveiller tous les modes optiques de sortie du dispositif, chacun des détecteurs étant configuré pour détecter des photons uniques ;

- une unité de commande (**CU**) reliée à la source (**So**), qui surveille et commande le fonctionnement de celle-ci, et reliée aux stations d'interférence A et B de manière à pouvoir commander leurs réglages, l'unité de commande (**CU**) étant configurée pour générer des nombres pseudo-aléatoires, dont le résultat est ensuite utilisé pour choisir les réglages des stations d'interférence A et B, ou l'unité de commande (**CU**) étant configurée pour produire des nombres quantiques pseudo-aléatoires sur la base des exécutions échouées de génération de nombres aléatoires quantiques afin de les utiliser pour le choix des réglages au niveau des stations d'interférence A et B, l'unité de commande (**CU**) étant en outre configurée pour générer des bits entièrement aléatoires (**N**) et une chaîne brute de bits aléatoires (**b**) à partir des données recueillies auprès de l'interféromètre, et comprenant :

  ◦ un circuit de coïncidence qui recueille, par l'intermédiaire de canaux de communication classiques, des informations provenant du système de détecteurs, analyse et enregistre dans une mémoire les événements de détection obtenus et leurs coïncidences,

- dans lequel l'unité de commande (CU) est configurée pour effectuer un test de Bell sur les données obtenues au moyen d'une inégalité de Bell CH (Clauser-Horne), le résultat obtenu du test pouvant également être utilisé par l'unité de commande (CU) pour modifier les réglages du dispositif afin d'étalonner le système, et l'unité de commande (CU) étant configurée pour effectuer un autotest sur la base des résultats obtenus et selon que la non-classicité de Bell est observée ou non, en calculant la min-entropie qui détermine le débit binaire (r), chacune des stations d'interférence A et B comprenant :

  • au moins un obturateur (**S**) destiné à bloquer le trajet optique et commandé par l'unité de commande (**CU**),
  • au moins un déphaseur (**P**) destiné à déphaser le faisceau de manière contrôlable et stable, de préférence commandé par l'unité de commande (**CU**),
  • un séparateur de faisceau optique ($\mathbf{BS_{A/B}}$) réglable ou non réglable, de préférence sous la forme d'un dispositif optique à deux ports d'entrée et deux ports de sortie commandé par l'unité de commande (**CU**) ;
  • au moins un filtre (**F**) qui transmet la lumière selon un profil fréquentiel strictement défini correspondant à la source (**So**).

2. Système selon la revendication 1, dans lequel l'unité de commande (**CU**) est configurée pour fournir à l'utilisateur la chaîne brute de bits aléatoires (**b**) et le débit binaire r calculé en vue d'une procédure d'extraction d'aléa, ou pour effectuer elle-même la procédure d'extraction d'aléa et fournir une chaîne quantique de bits entièrement aléatoires ($\mathbf{b_r}$).

3. Système selon l'une quelconque des revendications 1 à 2, dans lequel la source (**So**) comprend les éléments suivants reliés par des trajets optiques :

- un laser (**LASER**) commandé par l'unité de commande (**CU**) pour produire un faisceau lumineux cohérent pulsé dirigé vers le séparateur de faisceau ($\mathbf{BS_1}$),
- un séparateur de faisceau optique ($\mathbf{BS_1}$) réglable ou non réglable, de préférence sous la forme d'un dispositif optique à deux ports d'entrée et deux ports de sortie,
- un séparateur de faisceau optique ($\mathbf{BS_2}$) réglable ou non réglable, de préférence sous la forme d'un dispositif optique symétrique à deux ports d'entrée et deux ports de sortie,
- au moins un atténuateur (**A**), de préférence à transmissivité réglable et commandé par l'unité de commande (**CU**),
- un séparateur de faisceau optique ($\mathbf{BS_C}$) réglable ou non réglable, à deux ports d'entrée et deux ports de sortie, de préférence symétrique, destiné à répartir les photons entre les stations d'interférence,
- une unité de doublage de fréquence (**FD**) qui double, par génération de seconde harmonique, la fréquence d'une partie du faisceau incident provenant du (**LASER**),
- au moins un milieu non linéaire (**PDC**) permettant un processus de conversion paramétrique descendante spontanée qui génère des photons uniques corrélés dans deux faisceaux redirigés vers le détecteur ($\mathbf{D_t}$) et vers le séparateur de faisceau ($\mathbf{BS_C}$),
- au moins un filtre (**F**) qui transmet la lumière selon un profil fréquentiel strictement défini,

et, en outre, l'unité de détecteurs comprend :

- cinq photodétecteurs ($\mathbf{D_{A1}}$, $\mathbf{D_{A2}}$, $\mathbf{D_{B1}}$, $\mathbf{D_{B2}}$, $\mathbf{D_t}$) destinés à détecter des photons uniques selon des profils fréquentiels spécifiés par le filtre (**F**), la sortie des détecteurs étant reliée à l'unité de commande (**CU**) pour l'analyse des coïncidences, la détection d'un photon par ($\mathbf{D_t}$) signalant la génération réussie d'un état de photon

unique annoncé, tandis que les détecteurs ($\mathbf{D_{A1}}$, $\mathbf{D_{A2}}$ et $\mathbf{D_{B1}}$, $\mathbf{D_{B2}}$) détectent respectivement les photons aux sorties des stations d'interférence A et B.

**4.** Procédé de génération d'une chaîne de nombres aléatoires quantiques destiné à être utilisé avec le système selon la revendication 1, comprenant les étapes suivantes :

a) demander, un nombre déterminé de fois, au moyen de l'unité de commande (**CU**), à la source (**S**) de générer séquentiellement les états de photons uniques annoncés et les états cohérents, qui sont ensuite tous transmis aux stations d'interférence A et B,
b) entre-temps, modifier de manière pseudo-aléatoire, au moyen de l'unité de commande (**CU**), les réglages des stations d'interférence A et B en choisissant indépendamment, pour chaque station, entre deux réglages « on » et « off » (le réglage « off » correspondant au blocage de l'impulsion d'état cohérent de référence locale d'entrée au moyen de l'obturateur (S)), et enregistrer le réglage choisi dans la mémoire avec un horodatage,
c) pour chaque génération réussie d'un photon unique annoncé, enregistrer dans la mémoire, avec un horodatage permettant d'identifier le réglage correspondant à l'exécution considérée, les résultats provenant des détecteurs, deux bits étant créés comme résultat, à savoir un bit pour le motif de détection dans les ports de sortie de chacune des stations A et B, selon l'attribution suivante des résultats enregistrés dans la mémoire de l'unité de commande (**CU**) :

◦ pour le réglage « on » : si des photons sont enregistrés uniquement dans le détecteur local ($\mathbf{D_{A1/B1}}$), l'unité de commande (**CU**) attribue le résultat « 0 », sinon elle attribue « 1 »,
◦ pour le réglage « off », les unités de commande attribuent « 0 » si un photon quelconque est enregistré, et « 1 » dans le cas contraire,

d) préparer, dans l'unité de commande (**CU**), une chaîne brute de bits (**b**) à partir des résultats des exécutions dans lesquelles les réglages des deux stations d'interférence étaient « off », un seul bit de la chaîne étant produit à partir de chacune de ces exécutions réussies, ce bit étant le résultat obtenu au niveau d'une station d'interférence spécifiée par le protocole, par exemple A, et, à ce stade, de préférence, retirer de la chaîne brute de bits b les éléments correspondant à des événements présentant simultanément les résultats 1 et 0 dans les deux stations locales, en tant que couche d'autocorrection supplémentaire,
e) effectuer un autotest en calculant le débit binaire (**r**) en termes de min-entropie, soit au moyen d'une estimation de la probabilité de deviner un bit fondée sur la violation de l'inégalité CH, soit au moyen d'une décomposition des corrélations dans le polytope sans signalisation dans l'unité de commande (CU),
f) déterminer si le nombre $N_{ext}(b, r)$ de bits entièrement aléatoires pouvant être extraits d'une chaîne brute de bits (**b**) de longueur s, estimé à l'aide du débit binaire (**r**), est supérieur au nombre de bits entièrement aléatoires demandé, auquel cas l'unité de commande (**CU**) fournit (**b et r**) ou leur applique un protocole bien connu d'extraction d'aléa et fournit ($\mathbf{b_r}$), sinon les étapes a) à f) sont répétées en ajoutant les nouvelles données aux données obtenues lors des répétitions précédentes.

**5.** Procédé selon la revendication 4, dans lequel le procédé d'autotest comprend les étapes suivantes :

- estimer, dans l'unité de commande (CU), les probabilités P(ab|x,y) d'obtenir le résultat a dans la station A avec le réglage de mesure choisi x et le résultat b dans la station B avec le réglage de mesure choisi y, comme étant les fréquences de leur apparition dans les données obtenues,
- estimer, dans l'unité de commande (CU), le débit binaire (**r**) au moyen de l'une des étapes suivantes :

i. une estimation par violation de l'inégalité CH :

• estimer, dans l'unité de commande (CU), les probabilités $P_A(a|x)$ ($P_B(b|y)$) d'obtenir le résultat a(b) dans la station A(B) avec le réglage de mesure choisi x(y), et estimer l'expression CH suivante :

$$CH = P(00|on,on) + P(00|on,off) + P(00|off,on) - P(00|off,off) - P_A(0|on) - P_B(0|on),$$

• calculer de préférence, dans l'unité de commande (CU) :

$$r = -log_2\left(\left(1 - \frac{CH}{0.1086}\right) + \frac{CH}{0.2172}\right).$$

ii. une estimation par décomposition des corrélations dans le polytope sans signalisation :

• estimer, dans l'unité de commande (CU), la probabilité maximale $p_{det}$ de contribution de boîtes locales à la décomposition des corrélations P(ab|x,y) en points extrémaux du polytope sans signalisation,
• calculer dans l'unité de commande (CU)

$$r = -log_2\left(p_{det} + \frac{(1-p_{det})}{2}\right).$$

Interferometer
Trigger
Source
So
Reference coherent beam
S
Station B
System of
detectors
BS
c
Single photon state
Station A
Reference coherent beam
S
Input
Control Unit CU
output
Classical communication channel
Optical path

Fig. 1

LASER
BS1
FD
PDC
F
Dt
A
BS2
BSC
So
CUD
FPS
FPS
Input: N
Output:
b, br, r
CUA
DA1
BSA
DA2
BSB
DB1
CUB
DB2
Classical communication channel
Optical path


Fig. 2

a)
Electrical wire
Optical fiber
Passage under
LASER
BS1
FD
PDC
at
F
Dt
as
A
Station A
bA
BS2
DA1
F P S
S P F
DB1
bB
aA
BSA
BSC
aB
BSB
DB2
DA2
Station B
Input: N
CU
Output:
b, br, r
b)
output to internal devices
Input from internal devices
hardware drivers
PSU
PC (CPU, PRNG)
Memory
CC
Input
output


Figure 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018065593 A
- CN 206209694 U
- EP 3674885 B1
- WO 2006133650 A1
- US 2015227343 A
- EP 1447740 A
- WO 2021215941 A
- WO 2020257124 A1


### Non-patent literature cited in the description


- **BARKER E.** ; **KELSEY J.** Recommendation for Random Number Generation Using Deterministic Random Bit Generators. *NIST SP800-90A*, January 2012
- **T. FERREIRA DA SILVA** ; **G. B. XAVIER** ; **G. C. AMARAL** ; **G. P. TEMPORÃO** ; **J. P. VON DER WEID**. Quantum random number generation enhanced by weak-coherent states interference. *Opt. Express*, 2016, vol. 24, 19574-19580
- **CHRISTOPHER C. GERRY** ; **RICHARD J. BIRRITTELLA** ; **PAUL M. ALSING** ; **AMR HOSSAMELDIN** ; **MILLER EATON** ; **OLIVIER PFISTER**. Proposal for a quantum random number generator using coherent light and a non-classical observable. *J. Opt. Soc. Am. B*, 2022, vol. 39, 1068-1074
- **DAVIDE RUSCA** ; **THOMAS VAN HIMBEECK** ; **ANTHONY MARTIN** ; **JONATAN BOHR BRASK** ; **WEIXU SHI** ; **STEFANO PIRONIO** ; **NICOLAS BRUNNER** ; **HUGO ZBINDEN**. Practical self-testing quantum random number generator based on an energy bound. *rXiv: 1904.04819*, 2019
- **SHAFI, K. M** ; **CHAWLA, P** ; **HEGDE, A. S** ; **GAYATRI, R. S** ; **PADHYE, A** ; **CHANDRASHEKAR, C. M**. Multi-bit quantum random number generator from path-entangled single photons.. *arXiv:2202.10933*, 2022
- **PIRONIO, S** ; **ACÍN, A.** ; **MASSAR, S. et al.** Random numbers certified by Bell's theorem. *Nature*, 2010, vol. 464, 1021-1024
- **LIU, Y.** ; **ZHAO, Q.** ; **LI, MH. et al.** Device-independent quantum random-number generation. *Nature*, 2018, vol. 562, 548-551
- **P. R. SMITH** ; **D. G. MARANGON** ; **M. LUCAMARINI** ; **Z. L. YUAN** ; **A. J. SHIELDS**. Simple source device-independent continuous-variable quantum random number generator. *Phys. Rev. A*, 2019, vol. 99, 062326
- **WEINAN HUANG** ; **YICHEN ZHANG** ; **ZIYONG ZHENG** ; **YANG LI** ; **BINGJIE XU** ; **SONG YU**. Practical security analysis of a continuous-variable quantum random-number generator with a noisy local oscillator. *Phys. Rev. A*, 2020, vol. 102, 012422
- **S. M. TAN** ; **D. F. WALLS** ; **M. J. COLLETT**. Nonlocality of a single photon. *Phys. Rev. Lett.*, 1991, vol. 66, 252-255
- **L. HARDY**. Nonlocality of a single photon revisited. *Phys. Rev. Lett.*, 1994, vol. 73, 2279-2283
- **G. DONATI** ; **T. BARTLEY** ; **X-M. JIN** ; **M-D. VIDRIGHIN** ; **A. DATTA** ; **BARBIERI M.** ; **I. A. WALMSLEY**. Observing optical coherence across Fock layers with weak-field homodyne detectors. *Nat. Commun.*, 2014, vol. 5, 5584
- **T. DAS** ; **M. KARCZEWSKI** ; **A. MANDARINO** ; **M. MARKIEWICZ** ; **B. WOLONCEWICZ** ; **M. ZUKOWSKI**. Can single photon excitation of two spatially separated modes lead to a violation of Bell inequality via weak-field homodyne measurements?. *New Journal of Physics*, 2021, vol. 23 (7), 073042
- **T. DAS** ; **M. KARCZEWSKI** ; **A. MANDARINO** ; **M. MARKIEWICZ** ; **B. WOLONCEWICZ** ; **M. ZUKOWSKI**. Wave-particle complementarity: detecting violation of local realism with photon-number resolving weak-field homodyne measurements. *New Journal of Physics*, 2022, vol. 24 (3), 033017
- **T. DAS** ; **M. KARCZEWSKI** ; **A. MANDARINO** ; **M. MARKIEWICZ** ; **B. WOLONCEWICZ** ; **M. ZUKOWSKI**. Comment on 'Single particle nonlocality with completely independent reference states. *New Journal of Physics*, 2022, vol. 24 (3), 038001
- **T. DAS** ; **M. KARCZEWSKI** ; **A. MANDARINO** ; **M. MARKIEWICZ** ; **B. WOLONCEWICZ** ; **M. ZUKOWSKI**. Remarks about Bell-nonclassicality of a single photon. *Physics Letters A*, 2022, vol. 435, 128031

- **T. DAS** ; **M. KARCZEWSKI** ; **A. MANDARINO** ; **M. MARKIEWICZ** ; **M. ZUKOWSKI**. Optimal Interferometry for Bell Nonclassicality Induced by a Vacuum-One-Photon Qubit. *Phys. Rev. Applied*, 2022, vol. 18, 034074
- **MIGUEL HERRERO-COLLANTES et al.** *Quantum random number generators*, 2016